# EUROPÄISCHE PATENTANMELDUNG

(11) **EP 2 045 695 A1**
(43) Veröffentlichungstag der Anmeldung: **08.04.2009**
(21) Anmeldenummer: 07019292.7
(22) Anmeldetag: 01.10.2007
(51) Int. Cl.: G06F 3/033

(54) **Intuitive Datenübertragung auf ein mobiles Speichermedium**

(71) Anmelder: SIEMENS AKTIENGESELLSCHAFT, 80333 München (DE)
(72) Erfinder: Kagermeier, Robert, 90427 Nürnberg (DE)

(57) **Zusammenfassung**

Die Erfindung betrifft ein mobiles Speichermedium, eine Rechnereinheit und Verfahren zur Datenübertragung zwischen Speichermedium und Rechnereinheit sowie Programme zur Durchführung der Verfahren. Der Erfindung liegt die Aufgabe zugrunde, ein schnelles und intuitives Übertragen von Daten zwischen einer Rechnereinheit und einem mobilen Trägermedium zu ermöglichen. Diese Aufgabe wird dadurch gelöst, dass von der Rechnereinheit eine Benutzeroberfläche auf einem Bildschirm mit einer für einen Anwender nicht wahrnehmbaren Helligkeitsmodulation unterlegt wird, die von einer Fotodiode eines Speichermediums detektiert wird, worauf eine eineindeutige Helligkeitsinformation über den von der Fotodiode erfassten Ausschnitt über eine Funkschnittstelle an die Rechnereinheit übermittelt wird. Diese identifiziert daraufhin das Element, auf das ein Anwender die Fotodiode gerichtet hat, und startet nach Übermittlung einer Benutzereingabe die Übertragung der diesem Element zugeordneten Daten.

## Beschreibung

Die Erfindung betrifft ein mobiles Speichermedium, eine Rechnereinheit und Verfahren zur Datenübertragung zwischen Speichermedium und Rechnereinheit sowie Programme zur Durchführung der Verfahren.

Ein derartiges Speichermedium, auf das oder von dem Daten von bzw. zu einer Rechnereinheit übertragen werden können, kommt überall dort zum Einsatz, wo Daten mobil zur Verfügung stehen oder von einer Rechnereinheit auf eine andere übertragen werden sollen. Dies ist auf den verschiedensten Gebieten der Fall, wie beispielsweise in Industrie (z.B. Übertragung von Konfigurationsdaten), Entertainment (z.B. Download von MP3-Songs) und Consumer (z.B. Laden von Stadt-/Fahrplaninfo von entsprechenden Automaten), und wird im Folgenden an einem Beispiel aus der Medizin veranschaulicht.

Bilddaten von Patienten, die von verschiedenen, bildgebenden Modalitäten (MR, CT, Röntgen, Ultraschall etc.) erzeugt sein können, werden heutzutage meist in einem netzwerkbasierten Bildarchiv abgespeichert und über am Netzwerk angeschlossene Befundstationen ausgewertet. Die spontane Mitnahme eines Bilddatensatzes eines Patienten durch den Arzt, um beispielsweise eine Betrachtung an einem beliebigen PC zu ermöglichen, ist meist mit einem mehr oder weniger komplexen, zeitintensiven Kopiervorgang auf einen mobilen Datenträger verbunden.

Bisher musste für eine zeitversetzte Begutachtung eines Bilddatensatzes eine am Netzwerk angeschlossene Workstation verwendet werden. Mittels eines Patientenbrowsers werden vom Anwender im Archiv die entsprechenden Datensätze gesucht, auf die Workstation geladen und ggf. auf einen mobilen Datenträger kopiert. Dies ist meist ein komplexer und auch zeitintensiver Bedienvorgang. Alternativ ist es auch möglich, direkt an der lokalen Modalität zeitaufwändig die interessierenden Bilddatensätze beispielsweise auf CD, DVD oder Memory-Stick zu kopieren.

Der Erfindung liegt die Aufgabe zugrunde, ein schnelles und intuitives Übertragen von Daten zwischen einer Rechnereinheit und einem mobilen Trägermedium zu ermöglichen.

Diese Aufgabe wird gelöst durch ein mobiles Speichermedium mit einem Datenspeicher, einem Energiespeicher, einem Prozessor, zumindest einem Eingabemittel, einer Funkschnittstelle und einer Fotodiode, wobei die Fotodiode geeignet ist, einen Ausschnitt einer auf einem Bildschirm für einen Betrachter nicht wahrnehmbaren, punktuellen, kontinuierlich zeilenweise über den Bildschirm laufenden Helligkeitsmodulation zu detektieren.

Die Aufgabe wird weiter gelöst durch eine Rechnereinheit mit einer CPU und einer Funkschnittstelle, wobei mittels der CPU auf einem an die Rechnereinheit angeschlossenen Bildschirm eine für einen Betrachter nicht wahrnehmbare, punktuelle, kontinuierlich zeilenweise über den Bildschirm laufende Helligkeitsmodulation erzeugbar ist, wobei zumindest eine von einem mobilen Speichermedium gesendete eineindeutige Helligkeitsinformation über einen Ausschnitt der Helligkeitsmodulation mittels der Funkschnittstelle empfangbar ist, wobei mittels der CPU anhand der Helligkeitsinformation eine Bildschirmposition des Ausschnitts ermittelbar und ein von einer auf der Rechnereinheit laufen Applikation an der Bildschirmposition dargestelltes Element identifizierbar ist, wobei zumindest eine vom Speichermedium gesendete Benutzereingabe über die Funkschnittstelle empfangbar ist und wobei dem Element zugeordnete Daten bestimmbar und über die Funkschnittstelle zwischen der Rechnereinheit und dem Speichermedium übertragbar sind.

Die Aufgabe wird ferner gelöst durch Verfahren und Programme mit den in den Ansprüchen 16, 29, 36, 44 und 46 angegebenen Merkmalen.

Durch die erfindungsgemäße Lösung kann ein Anwender mit einem erfindungsgemäßen mobilen Speichermedium, sofern er sich in Funkreichweite (3 - 5 m bei typischerweise verwendetem Nahbereichsfunk) zu einer erfindungsgemäßen Rechnereinheit befindet, automatisch mit der Rechnereinheit über die Funkschnittstelle in Verbindung treten. Hält beispielsweise der Anwender das Speichermedium mit der integrierten Fotodiode auf ein Element am Bildschirm, dem zu übertragende Daten zugeordnet sind, z.B. ein Datei- oder Ordner-Symbol, so wird die von der Fotodiode detektierte Helligkeitsinformation über die zeilenweise über den Bildschirm laufende Helligkeitsmodulation des von der Fotodiode erfassten Ausschnitts via der Funkschnittstelle an die Rechnereinheit übermittelt. Die Rechnereinheit ermittelt (mit dem erfindungsgemäßen Programm) anhand der eineindeutigen Helligkeitsinformation das vom Anwender gewünschte Element. Betätigt der Anwender nun ein am Speichermedium vorgesehenes Eingabemittel - z.B. durch ein kurzes Drücken einer Taste - so wird damit ein direkter Kopiervorgang der angewählten Datei bzw. des angewählten Verzeichnisses gestartet und die Daten über die Funkschnittstelle z.B. auf das Speichermedium übertragen. Somit wird es dem Anwender ermöglicht, einen Datensatz (Datei/Ordner) auf einfache Art und Weise intuitiv und schnell auf ein Speichermedium zu übertragen.

Durch die erfindungsgemäße Lösung wird gewissermaßen eine Touchbedienung einer grafischen Benutzerschnittstelle ohne zusätzliche Hardwareerweiterungen des Bildschirms realisiert. Auf Seiten der Rechnereinheit ist hierzu lediglich - neben der Funkschnittstelle - ein reiner Software-Treiber (Programm) erforderlich, um das intuitive, schnelle "Abholen" von Daten an einer grafischen Benutzerschnittstelle (z.B. einem Bildschirm einer Workstations, einer Monitorampel, ...) zu ermöglichen.

Insbesondere für das Übertragen großer Datenmengen ist es vorteilhaft, die Funkschnittstelle als Hochgeschwindigkeitsfunkschnittstelle auszuführen (z.B. Wireless-USB mittels UWB, "Ultra Wide Band"), wobei in absehbarer Zukunft Wireless-USB als Nachfolger von Standard-USB standardmäßig in PCs und Workstations enthalten sein wird, da eine landesspezifische Funkzulassung bei diesem neuen globalen Funkstandard implizit gegeben ist.

Die erfindungsgemäße Lösung kann in vielen Bereichen angewendet werden: neben dem bereits ausführlicher angesprochenen Anwendungsfall aus der Medizin seien hier nur beispielhaft noch Anwendungsgebiete in der Industrie sowie im Consumer-und Entertainment-Bereich genannt. So können in der Industrie Prozess- und Servicedaten abgefragt werden oder Konfigurations-/Lizenzdaten übertragen werden. Im Consumer-/Entertainment-Bereich können z.B. Fahrplaninformationen von entsprechenden Automaten an Bahnhöfen oder Stadtplaninformationen von Automaten an Tourist-Informationen heruntergeladen werden. Für den Download von MP3-Songs z.B. von einem Server in einem Plattenladen ist es mit der erfindungsgemäßen Lösung auch möglich, dass bei der von einem Anwender gestarteten Datenübertragung neben dem Speichern des Songs auf dem Speichermedium auch Daten wie Zahlungs- und/oder Ident-Informationen vom Speichermedium auf die Rechnereinheit übertragen werden, da eine "Richtung" für die Datenübertragung ausdrücklich weder vorgegeben noch die Datenübertragung auf eine Richtung beschränkt ist. Für viele der beispielhaft genannten sowie weiterer (Spezial-) Anwendungen sind vorteilhafte Ausgestaltungen der Erfindung mit in Unteransprüchen angegebenen Merkmalen, insbesondere bzgl. Sicherheitsaspekten, äußerst hilfreich, worauf an gegebener Stelle noch einmal kurz hingewiesen werden wird.

In einer vorteilhaften Form der Ausgestaltung werden die Daten über die Funkschnittstelle verschlüsselt übertragen. Durch die Verschlüsselung des Datenstromes ist auch das Übertragen von sicherheitsrelevanten Daten wie Zahlungsinformationen im öffentlichen Raum ohne ein unbefugtes Abhören von Kreditkartennummern etc. problemlos möglich.

In einer weiteren vorteilhaften Ausführungsform werden die Daten im Datenspeicher des Speichermediums verschlüsselt abgelegt. Ein Anwender kann die auf dem Speichermedium enthaltenen Daten nur dann entschlüsseln, wenn er das korrekte Passwort angibt, beispielsweise indem er sich mittels seines Benutzer-Passwortes autorisiert. Diese passwortgeschützte Lese-Autorisierung sichert den Datenschutz auch bei Abhandenkommen des mobilen Datenträgers.

In einer weiteren vorteilhaften Ausführungsform ist der Datenspeicher des Speichermediums als Flash-Speicher ausgeführt. Dieser nicht-flüchtige elektronische Speicher eignet sich aufgrund seiner Resistenz gegen Erschütterungen und magnetische Felder besonders für mobile Anwendungen.

In einer weiteren vorteilhaften Ausführungsform ist der Energiespeicher des Speichermediums als Akkumulator ausgeführt. In besonders vorteilhafter Weise weist das Speichermedium hierbei eine Ladebuchse zum Laden des Akkumulators über ein Ladekabel einer Ladeeinrichtung auf.

In einer weiteren vorteilhaften Ausführungsform ist das Speichermedium mit zumindest einer zweiten Schnittstelle, insbesondere einer FireWire- und/oder USB-Schnittstelle, ausgeführt. Hierdurch kann das Speichermedium z.B. mittels des klassischen, steckerbasierten USB-Interfaces an jedem anderen PC wie ein herkömmlicher Memory-Stick wie gewohnt benutzt werden und die im Datenspeicher abgelegten Daten schnell und einfach an jedem dafür geeigneten System genutzt werden (z.B. zuhause, unterwegs, ...). Diese Ausführungsform kann dabei kostengünstig dadurch realisiert werden, dass ein herkömmlicher USB-Memory-Stick mit einer zusätzlichen Funkschnittstelle (z.B. Wireless-USB), einer Fotodiode, einer oder mehreren Tasten und einem Energiespeicher ausgestattet wird, da Memory-Stick- und Funk-Technologie aus dem Consumer-Umfeld verwendet werden können.

In einer weiteren vorteilhaften Ausführungsform ist der Energiespeicher über die zweite Schnittstelle aufladbar. Dies ist z.B. bei herkömmlichen FireWire- und USB-Schnittstellen möglich. Der beispielsweise über eine USB-Schnittstelle verfügbare maximale Laststrom von 500 mA ist dafür ausreichend. Somit kann ein Nachladen an jeder beliebigen USB-Schnittstelle erfolgen.

In einer weiteren vorteilhaften Ausführungsform weist das Speichermedium eine Zustandsanzeige zur Visualisierung eines Ladezustands des Energiespeichers auf. Dies kann beispielsweise durch eine Prozentangabe oder auch durch einen "Ladebalken" erfolgen (mittels LED, LCD, OLED, ...).

In einer weiteren vorteilhaften Ausführungsform wird ein Ladezustand des Energiespeichers an die Rechnereinheit übermittelt und von dieser auf dem Bildschirm visualisiert. Über diese Bildschirmeinblendung kann der Ladezustand während der Benutzung direkt im Auge behalten werden.

In einer weiteren vorteilhaften Ausführungsform ist eine Energiespar-Konfiguration vorgesehen, in der nach Ablauf einer einstellbaren Leerlaufzeit, in der keine Datenübertragung und keine Betätigung des Eingabemittels erfolgt, ein Energiesparmodus aktiviert wird, in dem keine Kommunikationsverbindung über die Funkschnittstelle herstellbar ist, wobei der Energiesparmodus durch ein kurzes Betätigen des Eingabemittels deaktivierbar ist. Hierdurch ist bei Nichtgebrauch des Speichermediums ein energiesparender Betrieb gewährleistet.

In einer weiteren vorteilhaften Ausführungsform ist dabei im Energiesparmodus eine einstellbare Zykluszeit vorgesehen, nach deren Ablauf zyklisch eine Kommunikationsverbindung über die Funkschnittstelle herzustellen versucht wird, wobei eine einstellbare Detektorzeit vorgesehen ist, für deren Dauer bei hergestellter Kommunikationsverbindung die Helligkeitsmodulation zu detektieren versucht wird, und wobei bei detektierter Helligkeitsmodulation der Energiesparmodus deaktiviert wird. Somit wacht das Speichermedium zyklisch aus dem Energiesparmodus auf und sucht nach einer in Reichweite befindlichen Rechnereinheit, mit der es sich ggf. automatisch verbindet. Detektiert das Speichermedium nicht innerhalb der Detektorzeit die charakteristische Helligkeitsmodulation, so wird die Verbindung wieder abgebaut und der Energiesparmodus wieder für die Dauer der Zykluszeit eingenommen.

In einer weiteren vorteilhaften Ausführungsform ist die Funkschnittstelle des Speichermediums durch längeres Betätigen des Eingabemittels ein- bzw. ausschaltbar. Vorteilhafterweise wird hierdurch auch eine eventuell vorhandene Zustandsanzeige deaktiviert, so dass das Speichermedium als Ganzes ein- bzw. ausgeschaltet wird.

In einer weiteren vorteilhaften Ausführungsform weist das Speichermedium einen eindeutigen Identifikator auf, der vor dem Übertragen der Daten an die Rechnereinheit übermittelt wird und von dieser mit einer in der Rechnereinheit registrierten Liste von Identifikatoren verglichen wird. Dabei erfolgt die Datenübertragung nur, wenn eine Übereinstimmung des Identifikators des Speichermediums mit einem der in der Liste enthaltenen Identifikatoren gefunden wird. Durch die Eintragung eines Identifikators in die auf der Rechnereinheit vorgehaltene Liste wird in einer einmaligen Registrierung der Identifikator (UID, "Unique ID") des Speichermediums der Rechnereinheit bekannt gemacht, womit sichergestellt wird, dass nur autorisierte Speichermedien für die Datenübertragung gemäß der erfindungsgemäßen Lösung verwendet werden können.

Durch die eindeutige "Registrierung" der mobilen Speichermedien wird eine hohe Sicherheit erreicht. Auf diese Weise kann das Speichermedium auch als "Lizenzschlüssel" eingesetzt werden, ohne dass spezifische Lese-Gerätschaften wie RFID-/Kartenleser etc. erforderlich sind. Dies ermöglicht auch ein einfaches "Laden" von (Probe-) Lizenzen an Grafikterminals z.B. auf Messen.

In einer weiteren vorteilhaften Ausführungsform ist das Speichermedium über die Funkschnittstelle und/oder die zumindest eine zweite Schnittstelle konfigurierbar. Somit können Parameterwerte beispielsweise für die Leerlaufzeit, die Zykluszeit und die Detektorzeit sowie Standardeinstellungen wie die standardmäßige Verwendung eines Energiesparmodus oder einer verschlüsselten Datenübertragung einfach und bequem an der Rechnereinheit oder jedem anderen dafür geeigneten PC mittels eines dafür vorgesehenen Konfigurationsprogrammes eingegeben werden.

In einer weiteren vorteilhaften Ausführungsform ist das Speichermedium in ein mobiles Endgerät integrierbar. Ein derartiges Endgerät kann z.B. ein multifunktionales Mobilfunkgerät (Smart Phone), ein MP3-Player oder ein herkömmlicher PDA sein, wobei aufgrund der Integration nominell eventuell doppelt vorhandene Komponenten, wie beispielsweise Datenspeicher, Energiespeicher, Prozessor oder Eingabemittel, real als je eine (gemeinsame) Komponente ausgeführt werden, die funktionell sowohl das Speichermedium als auch das Endgerät bedienen.

Die Verwendung eines mobilen Endgerätes mit einem integrierten Speichermedium gemäß der Erfindung ist insbesondere für Anwendungen von Vorteil, für die weitere, durch das mobile Endgerät zur Verfügung gestellte Funktionalitäten die mobile Verwendung von auf dem Speichermedium gespeicherten Daten direkt auf dem Endgerät ermöglichen. So können beispielsweise mit einem mit einem integrierten Speichermedium ausgerüsteten MP3-Player heruntergeladene MP3-Songs auch gleich abgespielt werden oder mit einem Smart Phone heruntergeladene Stadtplaninformationen direkt auf dem Display des Smart Phones angezeigt werden. Für Anwendungen in der Industrie kann als mobiles Endgerät z.B. ein herkömmliches mobiles Bediengerät mit einem Mensch-Maschine-Interface (MMI bzw. HMI, "Human Machine Interface") gewählt werden, mit dem beispielsweise heruntergeladene Prozessdaten auch gleich entsprechend visualisiert werden können.

In einer weiteren vorteilhaften Ausführungsform wird vor dem Starten der Datenübertragung zumindest das erste Eingabemittel zumindest einmal betätigt und somit zumindest eine zweite Benutzereingabe an die Rechnereinheit übermittelt, und es erfolgt zumindest eine zumindest eine Benutzereingabe erfordernde Bildschirmausgabe. Diese kann beispielsweise zum Bestätigen des Kopierervorgangs auffordern, was z.B. bei einem kostenpflichtigen Download sinnvoll ist, wobei die erforderliche Benutzereingabe auch einfach durch Betätigen eines dafür vorgesehenen Eingabemittels (beispielsweise einer über ein Display die Funktion "Ok" zugewiesenen Funktionstaste) gegeben werden kann.

In einer weiteren vorteilhaften Ausführungsform ist dabei die Bildschirmausgabe ein an das Element angepasstes Kontextmenü und wird ein Menüpunkt des Kontextmenüs durch Ermittlung einer dem Menüpunkt entsprechenden Bildschirmposition des der bei Empfang der erforderlichen Benutzereingabe zuletzt empfangenen Helligkeitsinformation zugeordneten Ausschnitts ausgewählt. Hierdurch können einem Anwender verschiedene Befehle (z.B. Copy, Cut, ...) zur Auswahl angeboten werden.

In einer weiteren vorteilhaften Ausführungsform werden dabei zumindest mittels einer der zumindest zwei Benutzereingaben Steuerbefehle zur Steuerung der Rechnereinheit gegeben. Das mobile Speichermedium fungiert somit als alternatives Zeigergerät zur Steuerung der Rechnereinheit über das grafische Interface.

In einer weiteren vorteilhaften Ausführungsform wird durch das Element kenntlich gemacht, ob die Daten vom Speichermedium an die Rechnereinheit oder von der Rechnereinheit an das Speichermedium übertragen werden. Somit ist für einen Anwender klar ersichtlich, ob es sich bei der zu startenden Datenübertragung um einen Upload oder einen Download handelt. Stehen beide Möglichkeiten zur Verfügung, sind hierfür dann natürlich auch zwei Elemente darzustellen, wofür allerdings für die Auswahl der gewünschten "Richtung" der Datenübertragung eine Benutzereingabe genügt (alternativ z.B. zur Darstellung nur eines Elementes und anschließender Auswahl der Richtung über ein Kontextmenü).

Weitere vorteilhafte Ausführungsformen, zum Teil in Ergänzung der bereits dargestellten wie z.B. die Aktivierung eines ersten oder zweiten Verschlüsselungsmodus, sind den Unteransprüchen zu entnehmen.

Im Folgenden wird die Erfindung anhand der in den Figuren dargestellten Ausführungsbeispiele näher beschrieben und erläutert. Es zeigen:
- FIG 1: eine schematische Darstellung der Funktionsweise der erfindungsgemäßen Lösung,
- FIG 2: ein Auswählen von zu übertragenden Daten mit einem mobilen Speichermedium gemäß der Erfindung.

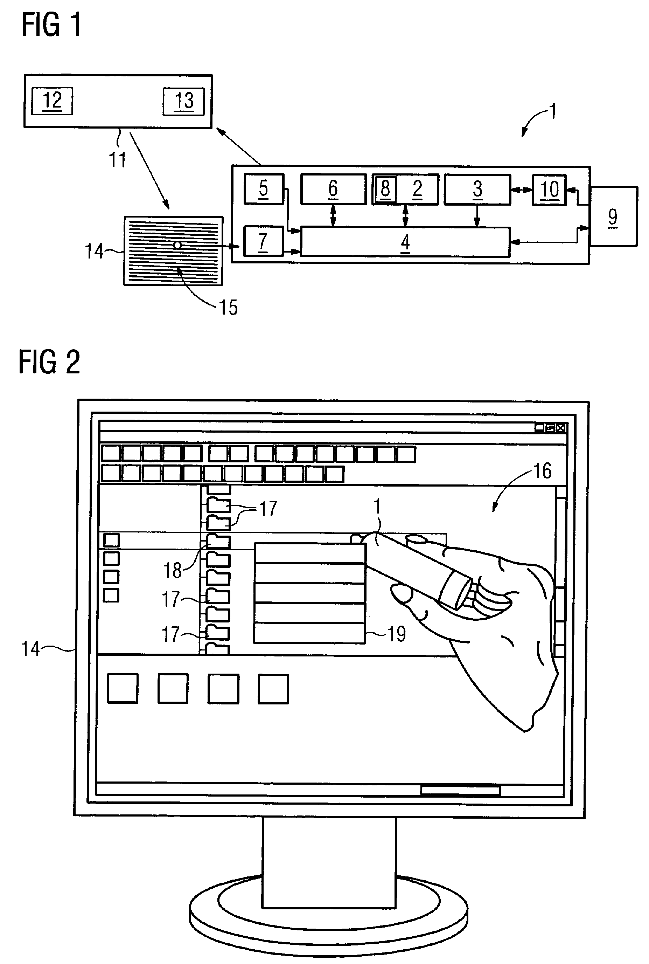

Fig 1 zeigt eine schematische Darstellung eines mobilen Speichermediums 1 und einer Rechnereinheit 11 mit einem an diese angeschlossenen Bildschirm 14, anhand derer die Funktionsweise der erfindungsgemäßen Lösung veranschaulicht wird. Das mobile Speichermedium 1 beinhaltet einen Datenspeicher 2 zur Speicherung von Daten 8, einen Energiespeicher 3, einen Prozessor 4, ein Eingabemittel 5, eine Funkschnittstelle 6, eine Fotodiode 7, eine zweite Schnittstelle 9 und eine Zustandsanzeige (mit Ladekontrolle) 10 des Energiespeichers 3. Die Rechnereinheit 11 weist unter anderem eine CPU 12 und eine Funkschnittstelle 13 auf. Durch ein auf der Rechnereinheit 11 laufendes Programm wird mittels der CPU 12 auf dem Bildschirm 14 eine für einen Anwender nicht wahrnehmbare, punktuelle, kontinuierlich zeilenweise über den Bildschirm 14 laufende Helligkeitsmodulation 15 erzeugt. Wird das Speichermedium 1 mit der Fotodiode 7 auf ein auf dem Bildschirm 14 von einer auf der Rechnereinheit 11 laufenden Applikation 16 (vgl. Fig. 2) dargestelltes Element gerichtet, detektiert die Fotodiode 7 die unterlegte Helligkeitsmodulation 15 des von ihr erfassten Ausschnittes, worauf der Prozessor 4 des Speichermediums 11 eine eineindeutige Helligkeitsinformation über die Funkschnittstelle 6 an die Rechnereinheit 11 übermittelt. Diese ermittelt nun anhand der Helligkeitsinformation den erfassten Ausschnitt und identifiziert das an der entsprechenden Bildschirmposition dargestellte Element. Sind nun dem dargestellten Element Daten 8 zugeordnet, so kann ein Anwender durch Betätigen des beispielsweise als Taster ausgeführten Eingabemittels 5 eine Benutzereingabe an die Rechnereinheit 11 übermitteln und somit die Datenübertragung starten. Die im Datenspeicher 2 abgelegten Daten 8 können anschließend beispielsweise über eine USB-Schnittstelle 9 auf jeden herkömmlichen PC geladen werden. Sind die Daten 8 verschlüsselt im Datenspeicher 2 gespeichert, muss ein Zugriff auf die Daten 8 durch Eingabe eines Passwortes autorisiert werden. Über die USB-Schnittstelle 9 wird dabei über die Ladekontrolle 10 auch der als Akkumulator ausgeführte Energiespeicher 3 aufgeladen.

Fig. 2 zeigt eine grafische Benutzeroberfläche einer auf einer Rechnereinheit 11 laufenden Applikation 16, wobei die grafische Darstellung auf dem Bildschirm 14 mit der für den Anwender nicht wahrnehmbaren Helligkeitsmodulation 15 unterlegt ist. Auf der Benutzeroberfläche sind verschiedene Datei/Ordner-Symbole 17, 18 dargestellt. Nach Richten der Fotodiode 7 des mobilen Speichermediums 1 auf eines der Datei/Ordner-Symbole 18 und Betätigen des Eingabemittels 5 hat sich ein Kontextmenü 19 geöffnet, das dem Anwender verschiedene Befehle zur Auswahl anbietet, wobei die Auswahl durch Richten der Fotodiode 7 auf den gewünschten Befehl und erneute Betätigung des Eingabemittels 5 erfolgt. Durch die Übermittlung der erneuten Benutzereingabe an die Rechnereinheit 11 wird dann die Datenübertragung gestartet.

Zusammenfassend betrifft die Erfindung ein mobiles Speichermedium, eine Rechnereinheit und Verfahren zur Datenübertragung zwischen Speichermedium und Rechnereinheit sowie Programme zur Durchführung der Verfahren. Der Erfindung liegt die Aufgabe zugrunde, ein schnelles und intuitives Übertragen von Daten zwischen einer Rechnereinheit und einem mobilen Trägermedium zu ermöglichen. Diese Aufgabe wird dadurch gelöst, dass von der Rechnereinheit eine Benutzeroberfläche auf einem Bildschirm mit einer für einen Anwender nicht wahrnehmbaren Helligkeitsmodulation unterlegt wird, die von einer Fotodiode eines Speichermediums detektiert wird, worauf eine eineindeutige Helligkeitsinformation über den von der Fotodiode erfassten Ausschnitt über eine Funkschnittstelle an die Rechnereinheit übermittelt wird. Diese identifiziert daraufhin das Element, auf das ein Anwender die Fotodiode gerichtet hat, und startet nach Übermittlung einer Benutzereingabe die Übertragung der diesem Element zugeordneten Daten.

## Patentansprüche

1. Mobiles Speichermedium (1) mit einem Datenspeicher (2), einem Energiespeicher (3), einem Prozessor (4), zumindest einem Eingabemittel (5), einer Funkschnittstelle (6) und einer Fotodiode (7), wobei die Fotodiode (7) geeignet ist, einen Ausschnitt einer auf einem Bildschirm (14) für einen Betrachter nicht wahrnehmbaren, punktuellen, kontinuierlich zeilenweise über den Bildschirm (14) laufenden Helligkeitsmodulation (15) zu detektieren.

2. Speichermedium nach Anspruch 1,
wobei Daten (8) über die Funkschnittstelle (6) mittels des Prozessors (4) verschlüsselt übertragbar sind.

3. Speichermedium nach Anspruch 1 oder 2,
wobei Daten (8) im Datenspeicher (2) mittels des Prozessors (4) verschlüsselt ablegbar sind.

4. Speichermedium nach einem der vorhergehenden Ansprüche,
wobei der Datenspeicher (2) als Flash-Speicher ausgeführt ist.

5. Speichermedium nach einem der vorhergehenden Ansprüche,
wobei der Energiespeicher (3) als Akkumulator ausgeführt ist.

6. Speichermedium nach einem der vorhergehenden Ansprüche
mit zumindest einer zweiten Schnittstelle (9), insbesondere einer FireWire- und/oder USB-Schnittstelle.

7. Speichermedium nach Anspruch 6,
wobei der Energiespeicher (3) über die zweite Schnittstelle (9) aufladbar ist.

8. Speichermedium nach einem der vorhergehenden Ansprüche
mit einer Zustandsanzeige (10) zur Visualisierung eines Ladezustands des Energiespeichers (3).

9. Speichermedium nach einem der vorhergehenden Ansprüche,
wobei eine Energiespar-Konfiguration vorgesehen ist, in der nach Ablauf einer einstellbaren Leerlaufzeit, in der keine Datenübertragung und keine Betätigung des Eingabemittels (5) erfolgt, ein Energiesparmodus aktiviert wird, in dem keine Kommunikationsverbindung über die Funkschnittstelle (6) herstellbar ist, wobei der Energiesparmodus durch ein kurzes Betätigen des Eingabemittels (5) deaktivierbar ist.

10. Speichermedium nach Anspruch 9,
wobei im Energiesparmodus eine einstellbare Zykluszeit vorgesehen ist, nach deren Ablauf zyklisch eine Kommunikationsverbindung über die Funkschnittstelle (6) herzustellen versucht wird, wobei eine einstellbare Detektorzeit vorgesehen ist, für deren Dauer bei hergestellter Kommunikationsverbindung die Helligkeitsmodulation (15) zu detektieren versucht wird, und wobei bei detektierter Helligkeitsmodulation (15) der Energiesparmodus deaktiviert wird.

11. Speichermedium nach einem der vorhergehenden Ansprüche,
wobei die Funkschnittstelle (6) durch längeres Betätigen des Eingabemittels (5) ein- bzw. ausschaltbar ist.

12. Speichermedium nach einem der vorhergehenden Ansprüche,
wobei das Speichermedium (1) einen eindeutigen Identifikator aufweist.

13. Speichermedium nach einem der vorhergehenden Ansprüche,
wobei das Speichermedium (1) über die Funkschnittstelle (6) und/oder die zumindest eine zweite Schnittstelle (9) konfigurierbar ist.

14. Speichermedium nach einem der vorhergehenden Ansprüche,
wobei das Speichermedium (1) in ein mobiles Endgerät integrierbar ist.

15. Mobiles Endgerät mit einem integrierten Speichermedium (1) nach einem der vorhergehenden Ansprüche.

16. Verfahren für ein Speichermedium (1) nach einem der Ansprüche 1 bis 14, wobei
- eine Kommunikationsverbindung mit einer Rechnereinheit (11) über die Funkschnittstelle (6) aufgebaut wird,
- ein Ausschnitt einer auf einem an die Rechnereinheit (11) angeschlossenen Bildschirm (14) für einen Betrachter nicht wahrnehmbaren, punktuellen, kontinuierlich zeilenweise über den Bildschirm (14) laufenden Helligkeitsmodulation (15) mittels der Fotodiode (7) fortlaufend detektiert wird,
- eine eineindeutige Helligkeitsinformation über den jeweils detektierten Ausschnitt an die Rechnereinheit (11) übermittelt wird,
- eine mittels des Eingabemittels (5) eingegebene erste Benutzereingabe an die Rechnereinheit (11) übermittelt wird und
- Daten (8) zwischen der Rechnereinheit (11) und dem Speichermedium (1) über die Funkschnittstelle (6) übertragen werden.

17. Verfahren nach Anspruch 16,
wobei zumindest eine zweite Benutzereingabe an die Rechnereinheit (11) übermittelt wird.

18. Verfahren nach Anspruch 16 oder 17,
wobei an die Rechnereinheit (11) zu übertragene und/oder von der Rechnereinheit (11) übertragene Daten (8) mittels des Prozessors (4) ver- bzw. entschlüsselt werden.

19. Verfahren nach einem der Ansprüche 16 bis 18,
wobei im Datenspeicher (2) zu speichernde Daten (8) mittels des Prozessors (4) verschlüsselt abgelegt werden.

20. Verfahren nach einem der Ansprüche 16 bis 19,
wobei der Energiespeicher (3) als Akkumulator ausgeführt wird.

21. Verfahren nach einem der Ansprüche 16 bis 20,
wobei der Energiespeicher (3) über die zweite Schnittstelle (9) aufgeladen wird.

22. Verfahren nach einem der Ansprüche 16 bis 21,
wobei ein Ladezustand des Energiespeichers (3) an die Rechnereinheit (11) übermittelt wird.

23. Verfahren nach einem der Ansprüche 16 bis 22,
wobei ein Ladezustand des Energiespeichers (3) über eine Zustandsanzeige (10) visualisiert wird.

24. Verfahren nach einem der Ansprüche 16 bis 23,
wobei eine Energiespar-Konfiguration vorgesehen wird, in der nach Ablauf einer einstellbaren Leerlaufzeit, in der keine Datenübertragung und keine Betätigung des Eingabemittels (5) erfolgt, ein Energiesparmodus aktiviert wird, in dem keine Kommunikationsverbindung über die Funkschnittstelle (6) hergestellt werden kann, wobei der Energiesparmodus durch ein kurzes Betätigen des Eingabemittels (5) deaktiviert wird.

25. Verfahren nach einem der Ansprüche 16 bis 24,
wobei im Energiesparmodus eine einstellbare Zykluszeit vorgesehen wird, nach deren Ablauf zyklisch eine Kommunikationsverbindung über die Funkschnittstelle (6) herzustellen versucht wird, wobei eine einstellbare Detektorzeit vorgesehen wird, für deren Dauer bei hergestellter Kommunikationsverbindung ein Ausschnitt der Helligkeitsmodulation (15) zu detektieren versucht wird, und wobei bei detektiertem Ausschnitt der Energiesparmodus deaktiviert wird.

26. Verfahren nach einem der Ansprüche 16 bis 25,
wobei die Funkschnittstelle (6) durch längeres Betätigen des Eingabemittels (5) ein- bzw. ausgeschaltet wird.

27. Verfahren nach einem der Ansprüche 16 bis 26,
wobei vor dem Übertragen der Daten (8) der eindeutige Identifikator an die Rechnereinheit (11) übermittelt wird.

28. Verfahren nach einem der Ansprüche 16 bis 27,
wobei das Speichermedium (1) über die Funkschnittstelle (6) oder die zumindest eine zweite Schnittstelle (9) konfiguriert wird.

29. Programm zur Durchführung eines Verfahrens nach einem der Ansprüche 16 bis 28 auf einem mobilen Speichermedium (1) nach einem der Ansprüche 1 bis 14.

30. Computerprogrammprodukt mit einem Programm nach Anspruch 29.

31. Rechnereinheit (11) mit einer CPU (12) und einer Funkschnittstelle (13),
- wobei mittels der CPU (12) auf einem an die Rechnereinheit (11) angeschlossenen Bildschirm (14) eine für einen Betrachter nicht wahrnehmbare, punktuelle, kontinuierlich zeilenweise über den Bildschirm (14) laufende Helligkeitsmodulation (15) erzeugbar ist,
- wobei zumindest eine von einem mobilen Speichermedium (1) gesendete eineindeutige Helligkeitsinformation über einen Ausschnitt der Helligkeitsmodulation (15) mittels der Funkschnittstelle (13) empfangbar ist,
- wobei mittels der CPU (12) anhand der Helligkeitsinformation eine Bildschirmposition des Ausschnitts ermittelbar und ein von einer auf der Rechnereinheit (11) laufenden Applikation (16) an der Bildschirmposition dargestelltes Element (18) identifizierbar ist,
- wobei zumindest eine vom Speichermedium (1) gesendete Benutzereingabe über die Funkschnittstelle (13) empfangbar ist und
- wobei dem Element (18) zugeordnete Daten (8) bestimmbar und über die Funkschnittstelle (13) zwischen der Rechnereinheit (11) und dem Speichermedium (1) übertragbar sind.

32. Rechnereinheit nach Anspruch 31,
wobei Daten (8) über die Funkschnittstelle (13) mittels der CPU (12) verschlüsselt übertragbar sind.

33. Rechnereinheit nach Anspruch 31 oder 32,
wobei Daten (8) in einem Speicherbereich der Rechnereinheit (11) mittels der CPU (12) verschlüsselt ablegbar sind.

34. Rechnereinheit nach einem der Ansprüche 31 bis 33
mit zumindest einer zweiten Schnittstelle, insbesondere einer FireWire- und/oder USB-Schnittstelle.

35. Rechnereinheit nach einem der Ansprüche 31 bis 34,
wobei die Rechnereinheit (11) eine Liste mit eindeutigen Identifikatoren aufweist.

36. Verfahren für eine Rechnereinheit (11) nach einem der Ansprüche 31 bis 35, wobei
- auf einem an die Rechnereinheit (11) angeschlossenen Bildschirm (14) eine für einen Betrachter nicht wahrnehmbare, punktuelle, kontinuierlich zeilenweise über den Bildschirm (14) laufende Helligkeitsmodulation (15) erzeugt wird,
- eine Kommunikationsverbindung mit einem mobilen Speichermedium (1) über die Funkschnittstelle (13) aufgebaut wird,
- zumindest eine vom Speichermedium (1) gesendete eineindeutige Helligkeitsinformation über einen Ausschnitt der Helligkeitsmodulation (15) empfangen wird,
- anhand der Helligkeitsinformation eine Bildschirmposition des Ausschnitts ermittelt und ein von einer auf der Rechnereinheit (11) laufenden Applikation (16) an der Bildschirmposition dargestelltes Element (18) identifiziert wird,
- eine vom Speichermedium (1) gesendete erste Benutzereingabe über die Funkschnittstelle (13) empfangen wird und
- dem Element (18) zugeordnete Daten (8) bestimmt und über die Funkschnittstelle (13) zwischen dem Speichermedium (1) und der Rechnereinheit (11) übertragen werden.

37. Verfahren nach Anspruch 36,
wobei vor dem Übertragen der Daten (8) zumindest eine vom Speichermedium (1) gesendete zweite Benutzereingabe empfangen wird und zumindest eine zumindest eine Benutzereingabe erfordernde Bildschirmausgabe (19) erfolgt.

38. Verfahren nach Anspruch 37,
wobei die Bildschirmausgabe (19) ein an das Element (18) angepasstes Kontextmenü ist und ein Menüpunkt des Kontextmenüs (19) durch Ermittlung einer dem Menüpunkt entsprechenden Bildschirmposition des der bei Empfang der erforderlichen Benutzereingabe zuletzt empfangenen Helligkeitsinformation zugeordneten Ausschnitts ausgewählt wird.

39. Verfahren nach Anspruch 37 oder 38,
wobei zumindest mittels einer der zumindest zwei Benutzereingaben Steuerbefehle zur Steuerung der Rechnereinheit (11) gegeben werden.

40. Verfahren nach einem der Ansprüche 36 bis 39,
wobei an das Speichermedium (1) zu übertragene und/oder von dem Speichermedium (1) übertragene Daten (8) mittels der CPU (12) ver- bzw. entschlüsselt werden.

41. Verfahren nach einem der Ansprüche 36 bis 40,
wobei im Speicherbereich der Rechnereinheit (11) zu speichernde Daten (8) mittels der CPU (12) verschlüsselt abgelegt werden.

42. Verfahren nach einem der Ansprüche 36 bis 41,
wobei vor dem Übertragen der Daten (8) ein eindeutiger Identifikator des Speichermediums (1) empfangen wird, der mit einer in der Rechnereinheit (11) registrierten Liste von Identifikatoren verglichen wird und bei dem eine Übereinstimmung mit einem der in der Liste enthaltenen Identifikatoren gefunden wird.

43. Verfahren nach einem der Ansprüche 36 bis 42,
wobei ein Ladezustand des Energiespeichers (3) des Speichermediums (1) empfangen und auf dem Bildschirm (14) visualisiert wird.

44. Programm zur Durchführung eines Verfahrens nach einem der Ansprüche 36 bis 43 auf einer Rechnereinheit (11) nach einem der Ansprüche 31 bis 35.

45. Computerprogrammprodukt mit einem Programm nach Anspruch 44.

46. Verfahren zum drahtlosen Übertragen von Daten (8) zwischen einem mobilen Speichermedium (1) nach einem der Ansprüche 1 bis 14 mit einem Programm nach Anspruch 29 und einer Rechnereinheit (11) nach einem der Ansprüche 31 bis 35 mit einem Programm nach Anspruch 44, wobei
- auf einem an die Rechnereinheit (11) angeschlossenen Bildschirm (14) von einer auf der Rechnereinheit (11) laufenden Applikation (16) zumindest ein die zu übertragenden Daten (8) repräsentierendes Element (18) dargestellt wird,
- das Speichermedium (1) mit der Fotodiode (7) auf einer Bildschirmoberfläche auf das Element (18) gerichtet wird und
- zum Starten der Datenübertragung ein erstes Eingabemittel (5) des Speichermediums (1) betätigt wird.

47. Verfahren nach Anspruch 46,
wobei durch das Element (18) kenntlich gemacht wird, ob die Daten (8) vom Speichermedium (1) an die Rechnereinheit (11) oder von der Rechnereinheit (11) an das Speichermedium (1) übertragen werden.

48. Verfahren nach Anspruch 46 oder 47,
wobei vor dem Starten der Datenübertragung zumindest das erste Eingabemittel (5) zumindest einmal betätigt wird und zumindest eine zumindest eine Benutzereingabe erfordernde Bildschirmausgabe (19) erfolgt.

49. Verfahren nach Anspruch 48,
wobei als zumindest eine Bildschirmausgabe (19) ein an das Element (18) angepasstes Kontextmenü ausgegeben wird, wobei das Speichermedium (1) mit der Fotodiode (7) auf einen Menüpunkt des Kontextmenüs (19) gerichtet wird und wobei zur Auswahl des Menüpunktes das Eingabemittel (5) betätigt wird.

50. Verfahren nach Anspruch 48 oder 49,
wobei zumindest ein Steuerbefehl zur Steuerung der Rechnereinheit (11) gegeben wird.

51. Verfahren nach einem der Ansprüche 46 bis 50,
wobei ein erster Verschlüsselungsmodus aktiviert wird, in dem die Daten (8) über die Funkschnittstelle (6) verschlüsselt übertragen werden.

52. Verfahren nach einem der Ansprüche 46 bis 51,
wobei ein zweiter Verschlüsselungsmodus aktiviert wird, in dem die Daten (8) im Datenspeicher (2) des Speichermediums (1) verschlüsselt abgelegt werden.
